Europäisches Patentamt

European Patent Office

Office européen des brevets

(19)

(11) Veröffentlichungsnummer : **0 056 839**
**B1**

(12)

# EUROPÄISCHE PATENTSCHRIFT

(45) Veröffentlichungstag der Patentschrift :
13.03.85

(21) Anmeldenummer : 81107644.7

(22) Anmeldetag : 25.09.81

(51) Int. Cl.⁴ : **H 01 L 27/14,** H 01 L 31/10,
H 04 N  5/32

(54) Strahlenempfindlicher Festkörperbildwandler.

(30) Priorität : 19.01.81 DE 3101504

(43) Veröffentlichungstag der Anmeldung :
04.08.82 Patentblatt 82/31

(45) Bekanntmachung des Hinweises auf die Patenterteilung : 13.03.85 Patentblatt 85/11

(84) Benannte Vertragsstaaten :
DE FR

(56) Entgegenhaltungen :
GB-A- 2 044 996
US-A- 4 245 158

(73) PatentInhaber : Siemens Aktiengesellschaft
Berlin und München Wittelsbacherplatz 2
D-8000 München 2 (DE)

(72) Erfinder : Haendle, Jörg
Leipziger Strasse 16g
D-8520 Erlangen (DE)
Erfinder : Horbaschek, Heinz
Dreibergstrasse 10a
D-8520 Erlangen (DE)

## Beschreibung

Die Erfindung betrifft einen strahlenempfindlichen Festkörperbildwandler mit einer Anzahl von FET, der ein Substrat mit eindiffundierten Arbeitselektroden aufweist, auf dem eine Isolierschicht aufgetragen ist, die im Bereich der Arbeitselektroden leitende Gateelektroden trägt, die von einer strahlenempfindlichen Schicht überdeckt werden, auf der ein transparente leitende Elektrode aufgebracht ist, sowie mit Schaltmitteln zum wahlweise zerstörungsfreien Lesen oder Löschen der Ladungen der FET und mit einem Taktgenerator zur Anschaltung an einen Videoverstärker. Derartige Vorrichtungen setzen optische Bilder in Fernsehbilder um. Sie ermöglichen einen einfachen, platz- und gewichtsparenden Aufbau einer Fernsehaufnahmeeinrichtung.

Aus der GB-Patentanmeldung 20 44 996 ist ein derartiger Festkörperbildwandler bekannt, der als Bildelemente Feldeffekttransistoren (FET) aufweist. In einem Halbleiter-Substrat des einen Leitfähigkeittyps sind für jeden FET zwei Zonen des anderen Leitfähigkeittyps eindiffundiert, die die Arbeitselektroden eines FET's bilden. Zwischen den Zonen befindet sich der Gate-Kanal des FET's. Über dem Substrat ist eine dünne Isolierschicht aufgebracht. Im Bereich der Zonen und des Gate-Kanals ist die Isolierschicht mit einer leitenden Gateelektrode überdeckt. Auf dieser Gateelektrode befindet sich eine fotoelektrische Wandlerschicht, auf der eine transparente Elektrode aufgetragen ist. Durch das durch die transparente Elektrode fallende Licht verändert sich die Leitfähigkeit der fotoelektrischen Wandlerschicht, so daß sich die Gateelektrode entsprechend dem Lichteinfall auflädt. Durch diese Ladung auf der Gateelektrode wird die Leitfähigkeit des Gate-Kanals des FET verändert. Werden die Arbeitselektroden an eine Spannung gelegt, so fließt ein Strom, der einem Videoverstärker zugeführt ist. Sind mehrere dieser FET in einer Matrix angeordnet und werden sie nacheinander an den Videoverstärker angeschaltet, so erhält man ein Fernsehsignal. Sind sämtliche Informationen ausgelesen, so wird an jede der Gateelektroden über Löschschalter eine Löschspannung angelegt, so daß die Ladung abfließen kann und die FET gelöscht werden. Nach dem Öffnen der Löschschalter können die Gateelektroden durch Lichteinfall wieder aufgeladen werden. Als nachteilig erweist sich hierbei, daß zum Löschen jedes FET's ein Schalter vorgesehen sein muß, so daß sich der Aufbau der integrierten Schaltung als unerwünscht komplex erweist.

Es wurde vielfach versucht, röntgenstrahlenempfindliche Festkörperbildwandler mit integrierter Schaltungstechnik zu entwickeln. Diese wiesen aber nur eine Strahlenempfindlichkeit bis ca. 8 keV auf, so daß sie nicht in Röntgendiagnostikeinrichtungen Verwendung finden können.

Die Erfindung geht von der Aufgabe aus, einen Festkörperbildwandler der eingangs genannten Art zu schaffen, der sich durch einen einfachen Aufbau auszeichnet und bei dem die Packungsdichte der strahlenempfindlichen FET erhöht werden kann.

Die Aufgabe wird erfindungsgemäß dadurch gelöst, daß die Gateelektroden der FET über eine Schutzdiode mit Masse und über eine weitere Schutzdiode mit einer der Arbeitselektroden der FET verbunden ist, und daß die Schaltmittel an der transparenten Elektrode angeschlossen sind. Durch diesen Aufbau und der Beschaltung des Festkörperbildwandlers erfolgt ein gleichzeitiges Lesen und Löschen sämtlicher FET. Da die einzelnen Schaltmittel für das Löschen der Gateelektroden der FET entfallen, benötigt jedes Bildelement nur wenig Platz.

Der Anwendungsbereich läßt sich erweitern, wenn die strahlenempfindliche Schicht aus einem röntgenstrahlenempfindlichen Halbleiter mit innerem Fotoeffekt besteht. Ein guter Wirkungsgrad bei der Umwandlung von Röntgenbildern wird erreicht, wenn der röntgenstrahlenempfindliche Halbleiter amorphes Selen ist. Eine einfache Steuerung wird erreicht, wenn der Festkörperbildwandler eine zweidimensionale FET-Matrix aufweist.

Die Empfindlichkeit insbesondere bei Röntgenstrahlen läßt sich weiterhin erhöhen, wenn während der Belichtung der strahlenempfindlichen FET eine Spannungsquelle zur Erzeugung einer hohen Saugspannung an die transparente Elektrode anschaltbar ist und wenn die Saugspannung durch Schaltmittel zum Lesen und Löschen der gespeicherten Informationen geringfügig veränderbar ist.

Als vorteilhaft hat sich gezeigt, wenn die Halbleiterschicht einen mehrteiligen Aufbau aufweist. Es können kleinere, leichter herstellbare Wandler vorteilhaft verwendet werden, wenn die Halbleiterschicht des Festkörperbildwandlers aus mehreren Scheiben besteht. Der Taktgenerator weist einen einfachen Aufbau auf, wenn ein Horizontal- und ein Vertikal-Schieberegister vorgesehen sind, die von dem Taktgenerator angesteuert werden, und wenn die FET in Reihe mit je zwei Schaltelementen liegen, die von den Schieberegistern angesteuert werden und an den Videoverstärker angeschlossen sind.

Die Qualität des Fernsehbildes bei geringen Beleuchtungsstärken läßt sich weiterhin erhöhen, wenn dem Festkörperbildwandler ein Bildspeicher nachgeschaltet ist, in dem für ein Fernsehbild die Bildpunktinformationen einer Aufnahme über mehrere Zeittakte summiert werden. Es hat sich als zweckmäßig erwiesen, wenn der Festkörperbildwandler in einer Röntgendiagnostikeinrichtung als Fernsehaufnahmeeinrichtung verwendet wird.

Die Erfindung ist nachfolgend anhand eines in der Zeichnung dargestellten Ausführungsbeispieles näher erläutert. Es zeigen :

Figur 1 ein Blockschaltbild einer bekannten Röntgendiagnostikeinrichtung,

Figur 2 ein Blockschaltbild eines in der Röntgendiagnostikeinrichtung gemäß Figur 1 eingesetzten Bildwandlers nach der Erfindung, und

Figur 3 einen schematischen Aufbau eines Halbleiterelementes des Bildwandlers gemäß Figur 2 und sein prinzipielles Anschlußschaltbild.

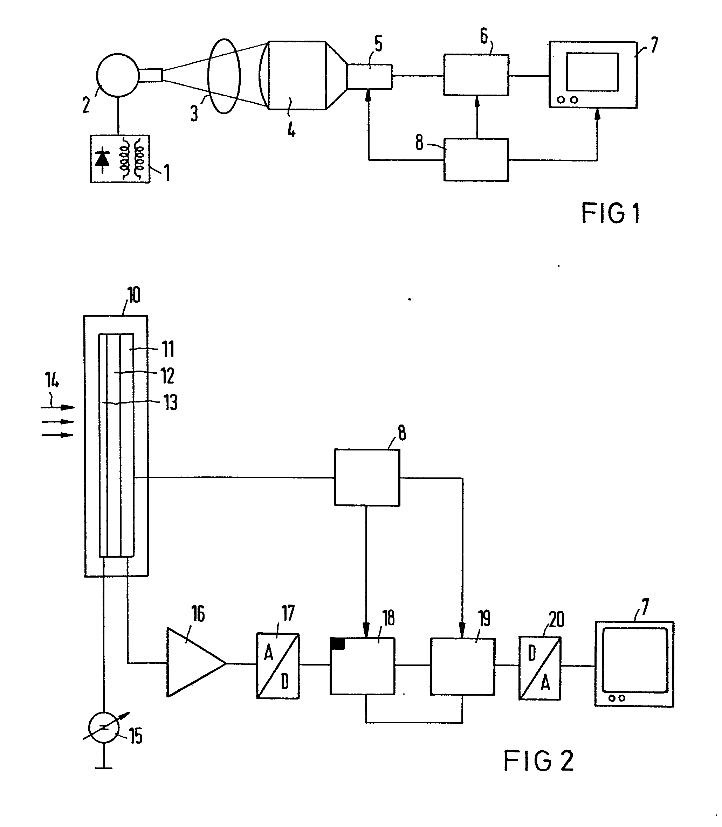

In der Figur 1 ist eine Röntgendiagnostikeinrichtung dargestellt, bei der der erfindungsgemäße Festkörperbildwandler eingesetzt werden kann. Ein Hochspannungsgenerator 1 speist eine Röntgenröhre 2, in deren Strahlengang sich ein Patient 3 befindet, der auf dem Eingangsleuchtschirm eines Röntgenbildverstärkers 4 ein Strahlenbild erzeugt. Der Röntgenbildverstärker 4 ist mit einer Fernsehkamera 5 verbunden, deren Ausgang auf eine Auswerteschaltung 6 geführt wird. Das dort verarbeitete und gespeicherte Signal wird auf einem Monitor 7 dargestellt. Ein Taktgenerator 8 steuert die Synchronisation der zeitlichen Funktionsabläufe der Fernsehkamera 5, der Auswerteschaltung 6 und des Monitors 7.

In der Figur 2 ist eine röntgenstrahlenempfindliche Fernsehaufnahmeeinrichtung dargestellt, die den Röntgenbildverstärker 4 und die Fernsehkamera 5 ersetzt und aus einem Schichtträger 10 besteht, in dem eine Siliciumscheibe 11 mit integrierter Schaltkreistechnik angeordnet ist. Auf der Siliciumscheibe 11 ist eine Halbleiterschicht 12 aufgebracht, die beispielsweise aus amorphen Selen besteht. Davor ist eine Schicht eines röntgenstrahlendurchlässigen Materials aufgebracht, die als leitende Elektrode 13 wirkt. Die Röntgenstrahlen fallen in Richtung der Pfeile 14 auf den Festkörperbildwandler 10 bis 13 ein. An die Elektrode 13 ist eine veränderbare Gleichspannungsquelle 15 zur Erzeugung der im Vergleich zur üblichen Halbleitertechnick hohen Saugspannung angeschlossen. Der integrierte Ausgangsbereich der Siliciumscheibe 11 ist mit einem Videoverstärker 16 verbunden, der die elektrischen Ausgangssignale des Festkörperbildwandlers 10 bis 13 verstärkt. In einem nachgeschalteten Analog-Digital-Wandler (A/D-Wandler) 17 werden die Videosignale digitalisiert und in einen Bildspeicher 18 eingelesen. Der Ausgang des Bildspeichers 18 ist mit einer Verarbeitungsschaltung 19 verbunden, deren einer Ausgang auf den Bildspeicher 18 zurückgeführt wird, und deren anderer Ausgang mit einem Digital-Analog-Wandler (D/A-Wandler) 20 verbunden ist. Dessen analoges Ausgangssignal wird dem Monitor 7 zugeführt, auf dem das Fernsehbild dargestellt wird. Der Taktgenerator 8 ist mit der Siliciumscheibe 11 des Festkörperbildspeichers 10 bis 13, mit dem Bildspeicher 18 und der Verarbeitungsschaltung 19 verbunden und steuert die zeitlichen Abläufe bei der Signalverarbeitung.

Die einfallenden Röntgenstrahlen erzeugen in dem Festkörperbildwandler 10 bis 13 ein dem Röntgenstrahlenbild entsprechendes Ladungsbild. Dieses bewirkt ein Ausgangssignal, das verstärkt in den Bildspeicher 18 eingelesen wird. Das Ladungsbild im Festkörperbildwandler 10 bis 13 wird nicht gelöscht, sondern mehrfach abgetastet, um niedrige Ausgangssignale, hervorgerufen durch geringe Dosiswerte, ausgleichen zu können. Die Ausgangssignale werden in dem Bildspeicher 18 über mehrere Abtastperioden summiert, so daß sich das Rauschen der elektrischen Bauelemente reduziert. Nach erfolgter Summation kann das gespeicherte Bild ausgelesen werden.

In der Verarbeitungsschaltung 19 wird das dem Bild entsprechende digitale Videosignal aufbereitet. So können Störstellen, beispielsweise fehlende Bildelemente, die von defekten Halbleiterelementen hervorgerufen werden, durch Interpolation der Information benachbarter Bildelemente eliminiert werden. Durch eine in der Verarbeitungsschaltung 19 gespeicherte Leeraufnahme (ohne Aufnahmeobjekt), die von den im Bildspeicher 18 gespeicherten Aufnahmen subtrahiert wird, können Empfindlichkeitsunterschiede oder Untergrundstrukturen kompensiert werden, so daß der Festkörperbildwandler 10 bis 13 geeicht wird.

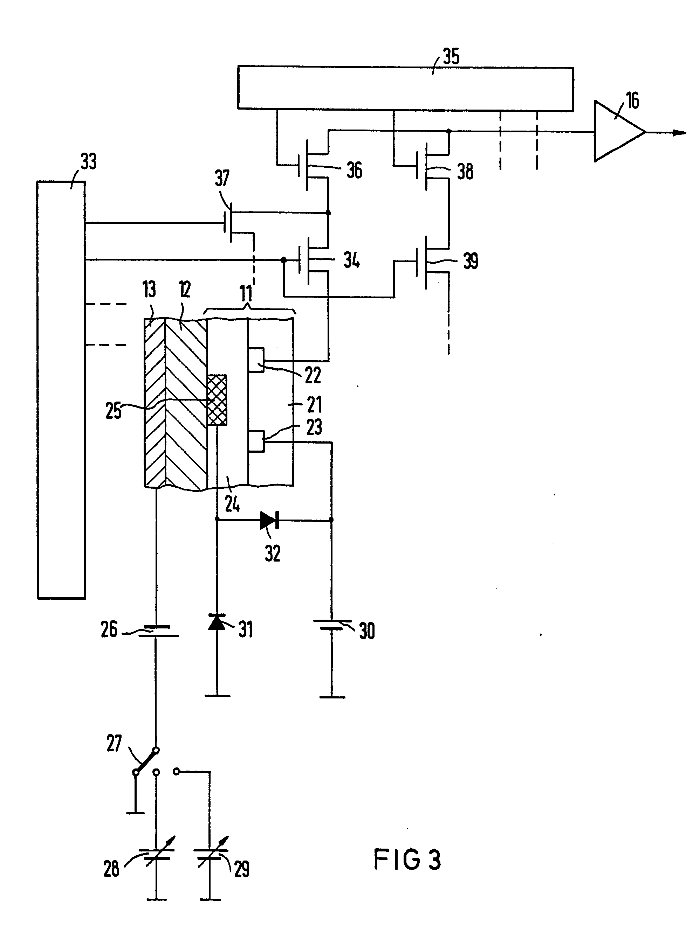

Die Arbeitsweise des Festkörperbildwandlers 10 bis 13 wird anhand eines Halbleiterelementes in der Figur 3 näher erläutert. Der Festkörperbildwandler 10 bis 13 ist geschnitten und abgebrochen dargestellt. Die Siliciumscheibe 11 weist ein Substrat 21 eines Leitungstyps auf, in das eine Drainzone 22 und eine Sourcezone 23 eindiffundiert sind, die vom entgegengesetzten Leitungstyp sind. Auf dem Substrat 21 befindet sich eine Isolierschicht 24 eines Dielektrikums, beispielsweise Siliciumdioxid. Über dem den Kanal des Feldeffekttransistors bildenden Zwischenraum zwischen der Drainzone 22 und der Sourcezone 23 liegt in der Schicht 24 die leitende Gateelektrode 25. Auf dieser Siliciumscheibe 11 befinden sich, wie bereits beschrieben, die Halbleiterschicht 12 und die leitende Elektrode 13. An der Elektrode 13 ist die veränderbare Gleichspannungsquelle 15 angeschlossen. Sie weist eine Spannungsquelle 26 auf, die in diesem Falle als Primärelement dargestellt ist. Diese Spannungsquelle 26 ist über einen Umschalter 27 auf Masse gelegt. Zum Lesen oder Löschen werden veränderliche Spannungsquellen 28 und 29 mit der Spannungsquelle 26 in Reihe geschaltet.

Die Sourcezone 23 ist mit einer Spannungsquelle 30 verbunden, die die Betriebsspannung für diesen integrierten Schaltkreis liefert. Die Gateelektrode 25 ist mit der Kathode einer Schutzdiode 31, deren Anode auf Masse gelegt ist, und mit der Anode einer Schutzdiode 32 verbunden, deren Kathode an den Pluspol der Spannungsquelle 30 angeschlossen ist.

Die Drainzone 22 ist über einen von einem Vertikal-Schieberegister 33 gesteuerten Feldeffekttransistor 34 und über einen von einem Horizontal-Schieberegister 35 gesteuerten Feldeffekttransistor 36 mit dem Videoverstärker 16 verbunden.

Das dargestellte Halbleiterelement befindet sich in der zweiten Zeile der ersten Spalte der Matrix. Mit einem weiteren Ausgang des Vertikal-Schieberegisters 33 ist die Gateelektrode eines Feldeffekttransistors 37 verbunden, dessen Drainelektrode an der Sourceelektrode des Feldeffekttransistors 36 angeschlossen ist. Dieser Feldeffekttransistor 37 schaltet das nicht dargestellte Halbleiterelement in der ersten Spalte und ersten Zeile durch. Weitere gestrichelt dargestellte Ausgänge des Vertikal-Schieberegisters 33 sind für die Ansteuerung der den restlichen Halbleiterelementen vorgeschalteten, nicht dargestellten Feldeffekttransistoren vorgesehen.

Der zweite Ausgang des Horizontal-Schieberegisters 35 ist mit der Gateelektrode eines Feldeffekttransistors 38 verbunden, dessen Drainelektrode am Eingang des Videoverstärkers 16 angeschlossen ist. Der Feldeffekttransistor 38 liegt in Reihe mit einem Feldeffekttransistor 39, dessen Gateelektrode an dem mit dem Feldeffekttransistor 34 verbundenen Ausgang des Vertikal-Schieberegisters 33 und dessen Sourceelektrode ebenfalls an einem nicht dargestellten Halbleiterelement angeschlossen ist, das in der zweiten Zeile und zweiten Spalte liegt. Die weiteren Ausgänge des Horizontal-Schieberegisters 35, die gestrichelt angedeutet sind, sind für die Ansteuerung der den Spalten der Matrix zugeordneten Feldeffekttransistoren vorgesehen.

Es ist also jedes der Halbleiterelemente durch zwei Feldeffekttransistoren mit dem Videoverstärker 16 verbindbar, die durch die Schieberegister 33 und 35 gesteuert werden. Jedem Halbleiterelement ist ein Feldeffekttransistor zugeordnet, der von dem Vertikal-Schieberegister 33 gesteuert wird. Für jede Spalte ist ein weiterer Feldeffekttransistor vorgesehen, der von dem Horizontal-Schieberegister 35 gesteuert wird. Das bedeutet, daß für eine m × n-Matrix mit m-Spalten und n-Zeilen $(n + 1) \times m$ Feldeffekttransistoren benötigt werden. Das Ausgangssignal des Vertikal-Schieberegisters 33 bestimmt die Zeile der Matrix der Halbleiterelemente und das Ausgangssignal des Horizontal-Schieberegisters 35 legt die Spalte fest.

Zur Erzeugung eines dem Strahlenbild entsprechenden Ladungsbildes auf der Siliciumscheibe 11 wird an die leitende Elektrode 13 zur Verarbeitung durch die Spannungsquelle 26 eine Saugspannung angelegt, die beispielsweise − 2 kV betragen kann. Da die Gateelektrode 25 über die Schutzdiode 31 mit Masse verbunden ist, baut sich in der Halbleiterschicht 12 eine Potentialdifferenz auf. Anschließend wird über den Umschalter 27 die Spannungsquelle 28 zugeschaltet, die beispielsweise eine Spannung von der halben Betriebsspannung (5 V) des integrierten Schaltkreises aufweist. Dadurch erhöht sich auch das Potential der Gateelektrode 25 auf + 5 V. Während der Belichtung fallen Röntgenstrahlen auf die Halbleiterschicht 12, so daß sich deren Widerstand verringert und die Gateelektrode 25 negativeres Potential annimmt. Nach erfolgter Belichtung können die Informationen sofort ausgelesen werden, indem die Halbleiterelemente, wie bereits beschrieben, am Videoverstärker 16 alternierend angeschaltet werden. Zum Löschen des Ladungsbildes wird durch den Umschalter 27 auf die Spannungsquelle 29 umgeschaltet, die beispielsweise eine Spannung von + 20 V aufweisen kann. Dadurch wird das Potential der Gateelektrode 25 angehoben und durch die Schutzdiode 32 auf die Betriebspannung begrenzt, wodurch die Bildinformation gelöscht wird. Anschließend wird wieder der Umschalter 27 in die gezeichnete Stellung gebracht, so daß das Halbleiterelement auf die nächste Belichtung vorbereitet wird.

Durch diese Potentialumschaltung wird ein zerstörungsfreies Lesen über mehrere Abtastungen hinweg ermöglicht. Anstelle einer Matrix von Halbleiterelementen läßt sich auch nur eine Zeile oder Spalte verwenden, die über die gesamte Aufnahmefläche verschoben wird. Dadurch verringert sich die Größe des Siliciumsubstrates, so daß ein derartiger Festkörperbildwandler sich leichter herstellen läßt.

Wird anstelle einer Siliciumscheibe 11 der Festkörperbildwandler 10 bis 13 aus mehreren aufgebaut, so lassen sich der Aufwand und die Ausfälle bei der Herstellung reduzieren. Da bei den Stoßstellen mit etwas grösseren Abständen gerechnet werden muß, lassen sich die fehlenden Bildpunkte annäherungsweise durch die Verarbeitungsschaltung ersetzen.

**Ansprüche**

1. Strahlenempfindlicher Festkörperbildwandler (10 bis 13) mit einer Anzahl von FET, der ein Substrat (21) mit eindiffundierten Arbeitselektroden (22, 23) aufweist, auf dem eine Isolierschicht (24) aufgetragen ist, die im Bereich der Arbeitselektroden (22, 23) leitende Gateelektroden (25) trägt, die von einer strahlenempfindlichen Schicht (12) überdeckt werden, auf der eine transparente leitende Elektrode (13) aufgebracht ist, sowie mit Schaltmitteln (27) zum wahlweise zerstörungsfreien Lesen oder Löschen der Ladungen der FET und mit einem Taktgenerator (8) zur Anschaltung an einen Videoverstärker (16), dadurch gekennzeichnet, daß jede Gateelektrode (25) der FET über eine Schutzdiode (31) mit Masse und über eine weitere Schutzdiode (32) mit einer der Arbeitselektroden (22, 23) der FET verbunden ist, und daß die Schaltmittel (27) an der transparenten Elektrode (13) angeschlossen sind.

2. Festkörperbildwandler nach Anspruch 1, dadurch gekennzeichnet, daß die strahlenempfindliche Schicht (12) aus einem röntgenstrahlenempfindlichen Halbleiter mit innerem Fotoeffekt besteht.

3. Festkörperbildwandler nach Anspruch 2, dadurch gekennzeichnet, daß der röntgenstrahlenempfindliche Halbleiter amorphes Selen ist.

4. Festkörperbildwandler nach einem der Ansprüche 1 bis 3, dadurch gekennzeichnet, daß der Festkörperbildwandler (10 bis 13) eine zweidimensionale FET-Matrix aufweist.

5. Festkörperbildwandler nach einem der Ansprüche 1 bis 4, dadurch gekennzeichnet, daß während der Belichtung der strahlenempfindlichen FET eine Spannungsquelle (26) zur Erzeugung einer hohen Saugspannung an die transparente Elektrode (13) anschaltbar ist, und daß die Saugspannung durch Schaltmittel (27) zum Lesen und Löschen der gespeicherten Informationen geringfügig veränderbar ist.

6. Festkörperbildwandler nach einem der Ansprüche 1 bis 5, dadurch gekennzeichnet, daß die strahlenempfindliche Schicht (12) einen mehrteiligen Aufbau aufweist.

7. Festkörperbildwandler nach einem der Ansprüche 1 bis 6, dadurch gekennzeichnet, daß die Halbleiterschicht (21) des Festkörperbildwandlers (10 bis 13) aus mehreren Scheiben besteht.

8. Festkörperbildwandler nach einem der Ansprüche 5 bis 7, dadurch gekennzeichnet, daß ein Horizontal- (35) und ein Vertikal-Schieberegister (33) vorgesehen sind, die von dem Taktgenerator (8) angesteuert werden, und daß die FET in Reihe mit je zwei Schaltelementen (34, 36) liegen, die von den Schieberegistern (33, 35) angesteuert werden und an dem Videoverstärker (16) angeschlossen sind.

9. Festkörperbildwandler nach einem der Ansprüche 1 bis 8, dadurch gekennzeichnet, daß dem Festkörperbildwandler (10 bis 13) ein Bildspeicher (18) nachgeschaltet ist, in dem für ein Fernsehbild die Bildpunktinformationen einer Aufnahme über mehrere Zeittakte summiert werden.

10. Festkörperbildwandler nach einem der Ansprüche 2 bis 9, dadurch gekennzeichnet, daß er in einer Röntgendiagnostikeinrichtung als Fernsehaufnahmeeinrichtung verwendet wird.

## Claims

1. A radiation sensitive solid-state image converter (10-13) having a number of FETs, which posseses a substrate (21) into which working electrodes (22, 23) have been diffused and on which there is applied an insulating layer (24) which, in the region of the working electrodes (22, 23), bears conductive gate electrodes (25) which are covered by a radiation sensitive layer (12) upon which there is arranged a transparent conductive electrode (13), and having switching means (27) for the selective non-destructive read-out or erasure of the charges of the FETs, and having a clock pulse generator (8) for connection to a video-amplifier (16), characterised in that each gate electrode (25) of the FETs is connected to earth via a protective diode (31) and is connected via a further protective diode (32) to one of the working electrodes (22, 23) of the FETs, and that the switching means (27) are connected to the transparent electrode (13).

2. A solid-state image converter as claimed in Claim 1, characterised in that the radiation sensitive layer (12) consists of an X-ray sensitive semiconductor having an internal photo-effect.

3. A solid-state image converter as claimed in Claim 2, characterised in that the X-ray sensitive semiconductor is amorphous selenium.

4. A solid-state image converter as claimed in one of Claims 1 to 3, characterised in that the solid-state image converter (10-13) possesses a two-dimensional FET matrix.

5. A solid-state image converter as claimed in one of Claims 1 to 4, characterised in that during the exposure of the radiation sensitive FETs a voltage source (26) which serves to produce a high absorption voltage can be connected to the transparent electrode (13), and that the absorption voltage can be changer slightly by switching means (27) for the read-out and erasure of the stored items of information.

6. A solid-state image converter as claimed in one of Claims 1 to 5, characterised in that the radiation sensitive layer (12) has a multi-component construction.

7. A solid-state image converter as claimed in one of Claims 1 to 6, characterised in that the semiconductor layer (21) of the solid state image converter (10-13) consists of a plurality of wafers.

8. A solid-state image converter as claimed in one of Claims 5 to 7, characterised in that a horizontal shift register (35) and a vertical shift register (33) are provided, driven by the clock pulse generator (8), and that the FETs are each arranged in series with two switching elements (34, 36) driven by the shift registers (33, 35) and are connected to the video-amplifier (16).

9. A solid-state image converter as claimed in one of Claims 1 to 8, characterised in that the solid-state image converter (10-13) is followed by an image store (18) in which, for a television picture, the items of image element information of a recording are added over a plurality of time cycles.

10. A solid-state image converter as claimed in one of Claims 2 to 9, characterised in that it is used as a television recording device in a X-ray diagnostic device.

## Revendications

1. Convertisseur d'image à l'état solide, sensible au rayonnement (10 à 13) comportant un ensemble de transistors FET et qui comprend un substrat (21) muni d'électrodes de travail (22, 23) réalisées par diffusion et sur lequel est déposée une couche isolante (24) qui porte, dans la région des électrodes de travail (22, 23), des électrodes de grille conductrices (25) qui sont recouvertes par une couche (12) sensible au rayonnement et sur laquelle est déposée une électrode conductrice transparente (13), ainsi que des moyens de commutation (27) permettant de lire sans destruction ou d'effacer au choix les charges des transistors FET, et comportant un générateur de cadence (8) pour le raccordement à un amplificateur vidéo (16), caractérisé par le fait que chaque électrode de grille (25) des transistors FET est reliée à la masse par l'intermédiaire d'une diode de protection (31) et à l'une des électrodes de travail (22, 23) des transistors FET par l'intermédiaire d'une autre diode de protection (22), et que les moyens de commutation (27) sont raccordés à l'électrode transparente (13).

2. Convertisseur d'image à l'état solide suivant la revendication 1, caractérisé par le fait que la couche (12) sensible au rayonnement est constituée par un semiconducteur sensible au rayonnement X et présentant un effet photoélectrique interne.

3. Convertisseur d'image à l'état solide suivant la revendication 2, caractérisé par le fait que le semiconducteur sensible au rayonnement X est du sélénium amorphe.

4. Convertisseur d'image à l'état solide suivant l'une des revendications 1 à 3, caractérisé par le fait que le convertisseur d'image à l'état solide (10, 13) possède une matrice bidimensionnelle de transistors FET.

5. Convertisseur d'image à l'état solide suivant l'une des revendications 1 à 4, caractérisé par le fait que pendant l'exposition des transistors FET sensibles au rayonnement, une source de tension (26) servant à produire une tension accélératrice élevée peut être raccordée à l'électrode transparente (13), et que la tension accélératrice peut être modifiée faiblement par des moyens de commutation (27) pour la lecture et l'effacement des informations mémorisées.

6. Convertisseur d'image à l'état solide suivant l'une des revendications 1 à 5, caractérisé par le fait que la couche (12) sensible au rayonnement possède une constitution en plusieurs éléments.

7. Convertisseur d'image à l'état solide suivant l'une des revendications 1 à 6, caractérisé par le fait que la couche semiconductrice (21) du convertisseur d'image à l'état solide (10 à 13) est constituée par plusieurs pastilles.

8. Convertisseur d'image à l'état solide suivant l'une des revendications 5 à 7, caractérisé par le fait qu'il est prévu un registre à décalage horizontal (35) et un registre à décalage vertical (33), qui sont commandés par le générateur de cadence (8), et que les transistors FET sont montés en série avec respectivement deux éléments de commutation (34, 36), qui sont commandés par les registres à décalage (33, 35) et sont raccordés à l'amplificateur vidéo (16).

9. Convertisseur d'image à l'état solide suivant l'une des revendications 1 à 8, caractérisé par le fait qu'en aval du convertisseur d'image à l'état solide (10 à 13) est montée une mémoire d'images (18) dans laquelle les informations de points d'image d'une prise de vue sont additionnées, pour une image de télévision, sur plusieurs intervalles de cadence.

10. Convertisseur d'image à l'état solide suivant l'une des revendications 2 à 9, caractérisé par le fait qu'il est utilisé en tant que dispositif de prise de vues de télévision dans un appareil de radiodiagnostic.

FIG 1

FIG 2

FIG 3